# EUROPEAN PATENT SPECIFICATION

(11) **EP 0 447 991 B1**
(45) Date of publication and mention of the grant of the patent: **08.01.1997**
(21) Application number: 91104060.8
(22) Date of filing: 15.03.1991
(51) Int. Cl.: G01N 15/02

(54) **Apparatus for measuring the distribution of the size of diffraction-scattering type particles**
Gerät zur Messung der Grössenverteilung von beugenden/streuenden Teilchen
Dispositif de mesure de la distribution des dimensions de particules diffractantes/dispersantes

(30) Priority: 19.03.1990 JP 71674/90
(43) Date of publication of application: 25.09.1991
(73) Proprietor: HORIBA, LTD., Minami-ku Kyoto (JP)
(72) Inventor: Togawa, Yoshiaki, Nishikyo-ku, Kyoto (JP); Igushi, Tatsuo, Shimogyo-ku, Kyoto (JP); Matsuda, Koichiro, Otsu-city, Shiga (JP)
(74) Representative: TER MEER - MÜLLER - STEINMEISTER & PARTNER

(56) References cited:
- EP-A- 0 029 662
- WO-A-87/01451
- GB-A- 2 095 827
- US-A- 4 906 094
- PATENT ABSTRACTS OF JAPAN vol 12, no. 8 (P-654)(2855), 12 January 1988; & JP - A - 62168033 (CANON INC.) 24.07.1987
- REVIEW OF SCIENTIFIC INSTRUMENTS vol. 55, no. 9, September 1984, pages 1375-1400, New York, NY, US; J.A. STEINKAMP: "Flow cytometry"

## Description

The present invention relates to an apparatus as claimed in the preamble of claim 1 for measuring a distribution of the size of diffraction-scattering type particles.

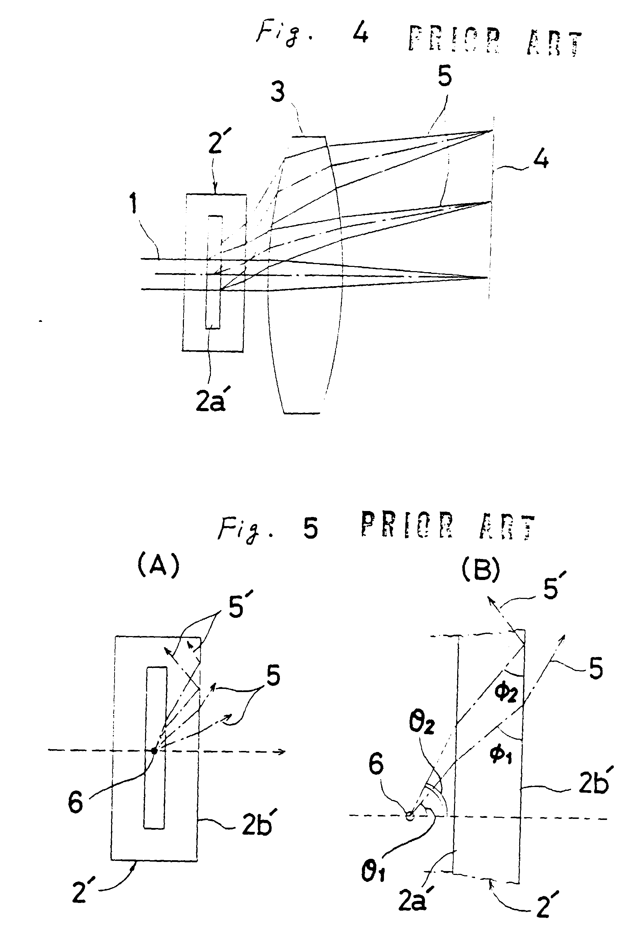

Fig. 4 shows main parts in a conventional general apparatus for measuring a distribution of the size of diffraction-scattering type particles. Referring to Fig. 4, reference numeral 1 designates a laser beam emitted from a laser device (not shown), reference numeral 2' designates a rectangular cylindrical sample cell having a rectangular sectioned external form and an internal space 2a' which is continuously supplied with a sample liquid from an ultrasonic diffusion bath (not shown) by means of a circulating pump (not shown), reference numeral 3 designates a condenser lens for collecting a light, which has transmitted through said sample cell 2', and a light, which has been scattered (diffracted) by particles contained in said sample liquid within the sample cell, and reference numeral 4 designates a detector formed of, for example, a silicon photodiode for detecting a light from said condenser lens 3.

In the above described apparatus for measuring a distribution of particle size, upon applying said laser beam 1 to the sample cell 2' under the condition that said internal space 2a' of the sample cell 2' is continuously supplied with the sample liquid, a part of the laser beam 1 is applied to said particles in the sample liquid within the sample cell 2' to be turned into a scattered (diffracted) light 5, whereby arriving at said detector 4 through the condenser lens 3.

However, in the apparatus for measuring a distribution of particle size having the above described construction, as shown in Fig. 5(A), (B), in the case where an angle φ₁ between said light 5 scattered by the particles 6 and an outer surface 2b' of the sample cell 2 is large, that is a scattering angle θ₁ from the particles 6 is small (for example θ₁< about 50° in the case where a dispersion medium is water), the scattered light 5 arrives at the detector 4 through the sample cell 2'. But in the case where an angle φ₂ between the scattered light 5' and said outer surface 2b' of the sample cell 2 is small, that is a scattering angle θ₂ from the particles 6 is large (θ₁ ≥ about 50° in the case where a dispersion medium is water similarly), the scattered light 5' is totally reflected by the outer surface 2b' of the sample cell 2 without transmitting through the sample cell 2'. In general, the smaller the particle size is, the larger the scattering angle θ is, so that, with the conventional apparatus for measuring a distribution of the size of diffraction-scattering type particles, sizes of particles having reduced diameters are difficult to measure and thus the measurement of a distribution of particle size over a wide range is impossible.

A further conventional particle analyzing device (JP-A-62-168033) includes a laser light source and an image forming lens passed by a laser beam to illuminate sample particles in a flow cell. Further, scattered light is detected by a photoelectric detector through a condenser lens to obtain information on the size of the sample particles.

The light input and output surfaces of the sample cell are parallel to each other and perpendicular to the optical axis of the image forming lens and the condenser lens for receiving forward scattered light.

Another conventional fine particle measuring system (US-A-4 906 094) comprises a flow cell having a rectangular cross section. An incident block is attached to the light input side while a light trap is provided at the light output side in order to stop the undiffracted-unscattered light beam. The output surface of the flow cell is perpendicular to the optical axis of the system.

Regarding the above described matters it is an object of the present invention to provide an apparatus having a relatively simple construction for measuring a distribution of the size of diffraction-scattering type particles capable of measuring also with high accuracy a size of particles having a reduced diameter in order to obtain a distribution of the particle size over a wide range.

In order to achieve the above described object an apparatus according to the preamble of claim 1 is provided with the characterizing features thereof.

According to the construction as claimed in claim 1 the angle between the scattered light and the outer surface of the sample cell can be substantially increased by beveling a part of the outer surface of the sample cell, so that the scattered light, which has been unable to pass through the outer surface of sample cell on account of the formally reduced angle between the scattered light and the outer surface of the sample cell, can now be measured and thus the distribution of particle size of the particles having small diameters to large diameters can be measured over a wide range.

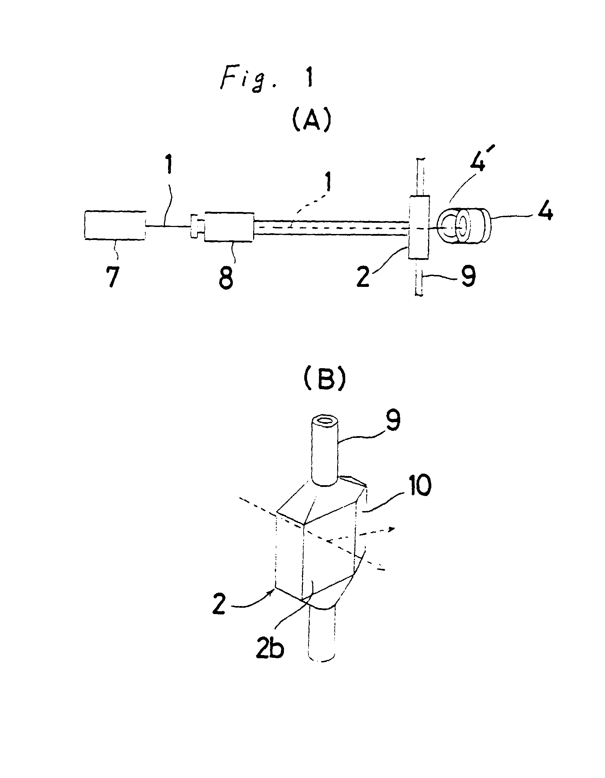

One preferred embodiment of the present invention is shown in Fig. 1(A), (B) and Fig. 2, in which
Fig. 1(A) is a block diagram showing main parts of an apparatus for measuring a distribution of the size of diffraction-scattering type particles;
Fig. 1(B) is a whole perspective view showing a sample cell of said apparatus; and
Fig. 2 is a drawing for describing an operation of the sample cell shown in Fig. 1(B).
Fig. 3 shows another preferred embodiment of the present invention and an operation of a sample cell.
Fig. 4 and 5 is a drawing for describing the prior art, respectively.

Preferred embodiments of the present invention will be described below with reference to the drawings.

One preferred embodiment of the present invention is shown in Figs. 1(A), (B) and Fig. 2. Referring to Fig. 1(A), reference numeral 7 designates a laser device for emitting a laser beam 1, reference numeral 8 designates a beam expander for suitably magnifying said laser beam, reference numeral 2 designates a sample cell communicatedly connected with an ultrasonic dispersion bath (not shown) through a piping 9 and continuously supplied with a sample liquid by means of a circulating pump (not shown). and reference numerals 4, 4' designates detectors each formed of, for example, a silicon photodiode for detecting a light which has passed through said sample cell 2 and has been diffracted-scattered by the particles in the sample.

The sample cell 2 according to the present invention is provided with a beveled portion 10 formed on an outer surface 2b on the radiating side thereof, as shown in Fig. 1(B).

A construction and an operation of the sample cell 2 are below described with reference to also Fig. 2. The sample cell 2 is made of a material, such as glass (for example quartz and BK-7 glass), superior in light-transmissivity, and having an external form and an internal space 2a of a light-transmissive portion comprising a rectangular section.

Said beveled portion 10 is formed in one edge portion of said outer surface 2b on the radiating side (light output side) of the sample cell 2 to substantially increase an angle between a scattered light h' and the beveled portion 10 in order to take said scattered light 5' out of the sample cell 2, whereby detecting the scattered light 5' by means of said detector 4', as above described. In addition, a scattered light 5 having a small scattering angle, which has passed through the outer surface 2b of the sample cell 2 which is not beveled, is detected by means of said separately provided detector 4. Alternatively, both said scattered light 5 and the scattered light 5' may be detected by means of only one detector 4 by providing a collecting lens behind the sample cell 2.

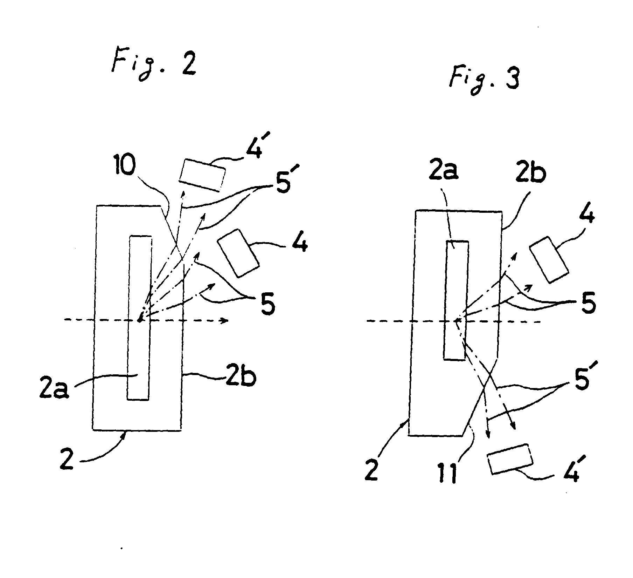

Fig. 3 shows another preferred embodiment of the present invention. A sample cell 2 is provided with a beveled portion 11 formed in an edge portion opposite to that in the above described preferred embodiment of an outer surface 2b on the radiating side thereof and a detector 4' is provided in said beveled portion 11 to detect a scattered light 5'. In addition, a scattered light 5 is detected by means of a detector 4 provided in the same manner as in the above described preferred embodiment.

Said angles of said beveled portions 10, 11 described in the present preferred embodiments are differently set depending upon the material and size of the sample cell, the refractive index of the dispersion medium and the like, so that they may be suitably and optionally selected. In addition, the beveled portion is not limited by the flat surface as in the above described preferred embodiment, that is it may also be a curved surface.

## Claims

1. Apparatus for measuring the particle size distribution of a liquid sample containing particles of the type which scatter and diffract light, comprising a sample cell (2), a light source (7), and detecting means (4), the sample cell being of substantially rectangular external cross section (2b), with an internal space (2a) of rectangular cross section, through which the sample under investigation is caused to flow, said source being arranged to direct coherent light onto one of the longer sides of the rectangular cell, such that light transmitted straight through the cell emerges on the same line from the other of the longer sides of the cell, the detecting means being arranged to detect light scattered and diffracted by the particles in the flowing sample, emerging at various angles with respect to said straight through line, characterised in that
a corner of the sample cell on the light output side thereof is bevelled, such that light, scattered and diffracted by particles in the sample at large angles, and which would otherwise be totally internally reflected at the output surface of the cell if this were flat and parallel to the input surface over the same length as the input surface, will pass through the bevelled surface, and the detecting means is arranged to be able to detect light emerging from both the part of the output surface which is parallel to the input surface and light emerging from the bevelled surface.

2. The apparatus as claimed in claim 1, **characterized in that** the beveled surface (10, 11) of the sample cell (2) is a flat surface.

3. The apparatus as claimed in claim 1, **characterized in that** the beveled surface (10, 11) of the sample cell (2) is a curved surface.

4. The apparatus as claimed in one of the claims 1 to 3, **characterized in that** separate detectors (4, 4') are provided for detecting a light (5, 5') diffracted-scattered under a small/large diffraction-scattering angle.

5. The apparatus as claimed in one of the claims 1 to 3, **characterized in that** the light (5, 5') diffracted-scattered under small and large diffraction-scattering angles is detected by means of merely one detector, and in that a collecting lens is provided between said detector and the sample cell (2).

6. The apparatus as claimed in claim 4, **characterized in that** the detectors (4, 4') for detecting the diffracted-scattered light (5, 5') having small/large diffraction-scattering angles are positioned on the same side of the coherent input light beam (1).

7. The apparatus as claimed in claim 4, **characterized in that** the detectors (4, 4') for detecting the diffracted-scattered light (5, 5') having small/ large diffracti.on-scattering angles are positioned on different sides of the coherent input light beam (1).

## Patentansprüche

1. Gerät zur Messung der Teilchengrößenverteilung einer Flüssigkeitsprobe, in der lichtstreuende und -beugende Teilchen enthalten sind, mit einer Probenzelle (2), einer Lichtquelle (7) und Detektionsmitteln (4), wobei die Probenzelle im wesentlichen einen rechteckigen Außenquerschnitt (2b) mit einem Innenraum (2a) von rechteckigem Querschnitt aufweist, durch den die zu untersuchende Probe fließt, die Lichtquelle so angeordnet ist, daß sie kohärentes Licht auf eine der längeren Seiten der rechteckigen Zelle strahlt, so daß Licht, das geradlinig durch die Zelle hindurchtritt, auf gleicher Linie von der anderen der längeren Seiten der Zelle wegläuft, und wobei die Detektionsmittel das durch die Teilchen in der fließenden Probe gestreute und gebeugte Licht detektieren, das unter verschiedenen Winkeln zur erwähnten geraden Durchtrittslinie erscheint, **dadurch gekennzeichnet,** daß eine Ecke der Probenzelle an der Lichtaustrittsseite abgeschrägt ist, so daß Licht, das durch Teilchen in der Probe unter großen Winkeln gestreut und gebeugt wird, und welches sonst an der Austrittsoberfläche der Zelle totalreflektiert werden würde, wenn diese flach wäre und über dieselbe Länge wie die Einfalloberfläche parallel zur Einfalloberfläche verliefe, durch die abgeschrägte Oberfläche hindurchtritt, so daß die Detektionsmittel Licht detektieren können, das sowohl an dem zur Eintrittsoberfläche parallelen Teil der Austrittsoberfläche als auch an der abgeschrägten Oberfläche erscheint.

2. Gerät nach Anspruch 1, **dadurch gekennzeichnet,** daß die abgeschrägte Oberfläche (10, 11) der Probenzelle (2) eben ausgebildet ist.

3. Gerät nach Anspruch 1, **dadurch gekennzeichnet,** daß die abgeschrägte Oberfläche (10, 11) der Probenzelle (2) gekrümmt ausgebildet ist.

4. Gerät nach einem der Ansprüche 1 bis 3, **dadurch gekennzeichnet**, daß separate Detektoren (4, 4') Licht (5, 5') detektieren, das unter einem kleinen/großen Beugungs-/Streuwinkel gebeugt/gestreut wird.

5. Gerät nach einem der Ansprüche 1 bis 3, **dadurch gekennzeichnet,** daß das unter kleinen und großen Beugungs-/Streuwinkeln gebeugte/gestreute Licht (5, 5') durch nur einen Detektor detektiert wird, und eine Sammellinse zwischen dem Detektor und der Probenzelle (2) vorhanden ist.

6. Gerät nach Anspruch 4, **dadurch gekennzeichnet**, daß die Detektoren (4, 4'), zur Detektion des unter kleinen/großen Beugungs-/Streuwinkeln gebeugten/gestreuten Lichts (5, 5') an derselben Seite des kohärenten Einganslichtstrahls (1) angeordnet sind.

7. Gerät nach Anspruch 4, **dadurch gekennzeichnet,** daß die Detektoren (4, 4'), zur Detektion des unter kleinen/großen Beugungs-/Streuwinkeln gebeugten/gestreuten Lichts (5, 5') an verschiedenen Seiten des kohärenten Eingangslichtstrahl (1) angeordnet sind.

## Revendications

1. Dispositif pour mesurer la distribution des dimensions de particules d'un échantillon liquide contenant des particules du type qui disperse et diffracte la lumière, comprenant une cellule d'échantillon (2), une source de lumière (7), et des moyens capteurs (4), la cellule d'échantillon présentant une section transversale extérieure sensiblement rectangulaire (2b), avec un espace intérieur (2a) de section transversale rectangulaire, à travers lequel on fait s'écouler l'échantillon en cours d'examen, ladite source étant agencée pour diriger la lumière cohérente sur l'une des faces longues de la cellule rectangulaire, de telle façon que la lumière transmise en ligne droite à travers la cellule émerge selon la même ligne de l'autre extrémité des faces longues de la cellule, les moyens capteurs étant agencés pour détecter la lumière dispersée et diffractée par les particules dans l'échantillon qui s'écoule, et qui émerge selon des angles différents par rapport à ladite ligne droite traversante, caractérisé en ce qu'un coin de la cellule d'échantillon du côté de la sortie de lumière de la cellule est en biseau, de telle façon que la lumière dispersée et diffractée par les particules dans l'échantillon sous des angles importants et qui autrement serait totalement réfléchie intérieurement sur la surface de sortie de la cellule si celle-ci était plane et parallèle à la surface d'entrée sur la même longueur que la surface d'entrée, traverse la surface en biseau, et en ce que les moyens capteurs sont agencés pour être capables de capter la lumière émergeant à la fois de la surface de sortie qui est parallèle à la surface d'entrée et la lumière émergeant de la surface en biseau.

2. Le dispositif selon la revendication 1, caractérisé en ce que la surface en biseau (10, 11) de la cellule d'échantillon (2) est une surface plane.

3. Le dispositif selon la revendication 1, caractérisé en ce que la surface en biseau (10, 11) de la cellule d'échantillon (2) est une surface incurvée.

4. Le dispositif selon l'une des revendications 1 à 3, caractérisé en ce que des capteurs séparés (4, 4') sont prévus pour détecter la lumière (5, 5') diffractée-dispersée sous un angle de diffraction-dispersion étroit/important.

5. Le dispositif selon l'une des revendications 1 à 3. caractérisé en ce que la lumière (5, 5') diffractée-dispersée sous des angles de diffraction-dispersion étroit et large, est captée au moyen d'un seul capteur, et en ce qu'une lentille collectrice est prévue entre ledit capteur et la cellule d'échantillon (2).

6. Le dispositif selon la revendication 4, caractérisé en ce que les capteurs (4. 4') pour capter la lumière diffractée-dispersée (5, 5') et qui présente des angles de diffraction-dispersion étroits/importants sont positionnés sur la même face que le faisceau de lumière cohérente d'entrée (1).

7. Le dispositif selon la revendication 4, caractérisé en ce que les capteurs (4, 4') pour capter la lumière diffractée-dispersée (5, 5') et qui présentent des angles de diffraction-dispersion étroits/importants, sont positionnés sur des faces différentes du faisceau de lumière cohérente d'entrée (1).
